# EUROPEAN PATENT APPLICATION

(11) **EP 4 792 638 A1**
(43) Date of publication of application: **19.08.2026**
(21) Application number: 25158354.8
(22) Date of filing: 17.02.2025
(51) Int. Cl.: A01D 41/127, A01D 43/08

(54) **FORAGE HARVESTER SYSTEM**

(71) Applicant: CNH Industrial Belgium N.V., 8210 Zedelgem (BE)
(72) Inventor: Born, Mathias, 8210 Zedelgem (BE)
(74) Representative: CNH Industrial IP Department

(57) **Abstract**

A forage harvester system comprising: a forage harvester configured to harvest crop and process the crop to form crop silage; and one or more processors configured to: receive image data from a mobile device, wherein the image data corresponds to an image of a sample of the crop silage captured by the mobile device; process the image data to determine a kernel processing score; and set one or more machine parameters of the forage harvester based on the kernel processing score.

## Description

### Field

The present disclosure relates to a forage harvester system and a method for controlling a forage harvester.

### Summary

According to a first aspect of the present disclosure there is provided a forage harvester system comprising:
a forage harvester configured to harvest crop and process the crop to form crop silage; and
one or more processors configured to:
   receive image data from a mobile device, wherein the image data corresponds to an image of a sample of the crop silage captured by the mobile device;
   process the image data to determine a kernel processing score; and
   set one or more machine parameters of the forage harvester based on the kernel processing score.

The one or more processors may be configured to: receive a kernel processing score threshold; and adjust the one or more machine parameters if the kernel processing score is less than the kernel processing threshold.

The one or more processors may receive the kernel processing score threshold from a farming management platform.

The one or more processors may be configured to:
calculate updated machine parameter values for each of the one or more machine parameters by inputting the kernel processing score to a feedforward model; and
set the machine parameter values to the updated machine parameter values.

The feedforward model may comprise a regression model or a machine learning model. The feedforward model may comprise a model trained on a training dataset comprising different sets of machine parameter values and an associated measured kernel processing score for each set of machine parameter values.

The one or more processors may be configured to:
receive moisture data representative of a moisture value of the harvested material; and
adjust the kernel processing score based on the moisture data;
adjust the kernel processing score threshold based on the moisture data; or
set the one or more machine parameters based on the moisture data.

The one or more processors may be configured to estimate a mass of kernels in the image using the moisture value and determine the kernel processing score based on a mass distribution of the kernels.

The one or more processors may be configured to estimate a mass of kernels in the image using an equation or look-up table relating the moisture value and size measurements of each kernel to a respective mass value.

The one or more processors may be configured to:
calculate updated machine parameter values for each of the one or more machine parameters by inputting the kernel processing score and the moisture value to a feedforward model; and
set the machine parameter values to the updated machine parameter values.

The one or more processors may be configured to receive the moisture data from one or more of:
a moisture sensor of the forage harvester;
a weather station; and
a server.

The one or more processors may be configured to:
output the image data and/or the kernel processing score to a farming management platform.

The one or more processors may be configured to:
receive personalisation data; and
adjust the kernel processing score based on the personalisation data; and/or
set the one or more machine parameters based on the personalisation data.

The personalisation data may comprise one or more of:
location specific personalisation data; and
machine specific personalisation data.

The machine specific personalisation data may comprise machine parameter calibration mappings that map the one or more machine parameters to measured KPS values.

The location specific personalisation data may comprise location calibration data that maps KPS values determined using image data from a mobile device to KPS values determined using a laboratory technique for the specific location.

The personalisation data may comprise an expected range of kernel processing values for the forage harvester and/or a location of harvesting operation. The one or more processors may be configured to:
compare the kernel processing score to the expected range; and
indicate that the kernel processing score is valid if the kernel processing score is inside the expected range; and
indicate that a new image or sample is required if the kernel processing score is outside the expected range.

The one or more machine parameters may comprise one or more of:
an engine speed;
a separation of the crop processor rollers;
a speed ratio of the crop processor rollers;
a driving speed; and
a cut length.

According to a second aspect of the present disclosure there is provided a method for controlling a forage harvester comprising:
receiving image data from a mobile device, wherein the image data corresponds to an image, captured by the mobile device, of a sample of crop silage produced by the forage harvester;
processing the image data to determine a kernel processing score; and
setting one or more machine parameters of the forage harvester based on the kernel processing score.

There may be provided a computer program, which when run on a computer, causes the computer to configure any apparatus, including a circuit, controller, converter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### Brief Description of the Drawings

One or more embodiments will now be described by way of example only with reference to the accompanying drawings in which:
Figure 1 shows an agricultural harvester in the form of a forage harvester;
Figure 2 highlights a crop processing path of the forage harvester of Figure 1; and
Figure 3 shows a schematic diagram with some functional elements of the forage harvester of Figures 1 and 2.

### Detailed Description

Modern agricultural harvesters have a lot of operational parameters (also referred to herein as machine parameters) that can be set while harvesting. In a forage harvester, for example, the user may change a forward drive speed, header height, feed roll speed, or crop processor configuration while continuing to harvest crop. By adjusting the harvester configuration, the user may increase the crop volume that is taken from the land, adjust a length of cut of the chopped crop that is thrown into the trailer following the harvester, or control the crushing of grain kernels and other plant material by the crop processor.

With these adjustments, the user tries to achieve various goals such as increasing the amount of crop that is harvested, ensuring that the quality of the harvested crop is optimal, and limiting the use of fuel for driving and operating the harvester. In modern forage harvesters, sensors may be available to inform the user about fuel consumption, harvested volumes, and length of cut, moisture content, ash content, fibre content, protein content, and sugar content of the harvested crop. Based on this information, the user makes his decisions about how to adapt the machine parameters of the harvester to optimise his harvesting results. Often, the various harvesting goals the user may have cannot be achieved simultaneously. Taking in more crop and cutting it into smaller pieces requires more fuel. Raising the header to improve the nutritional value of the harvested crop leads to a lower total volume of harvester material. A lot of experience and guess work is therefore needed to optimally control a forage harvester.

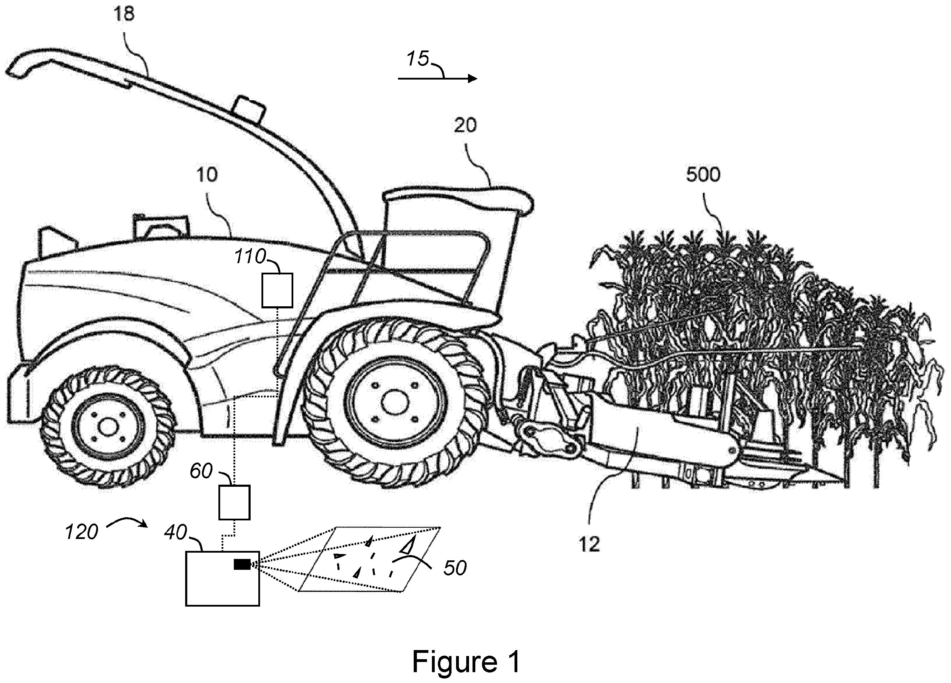

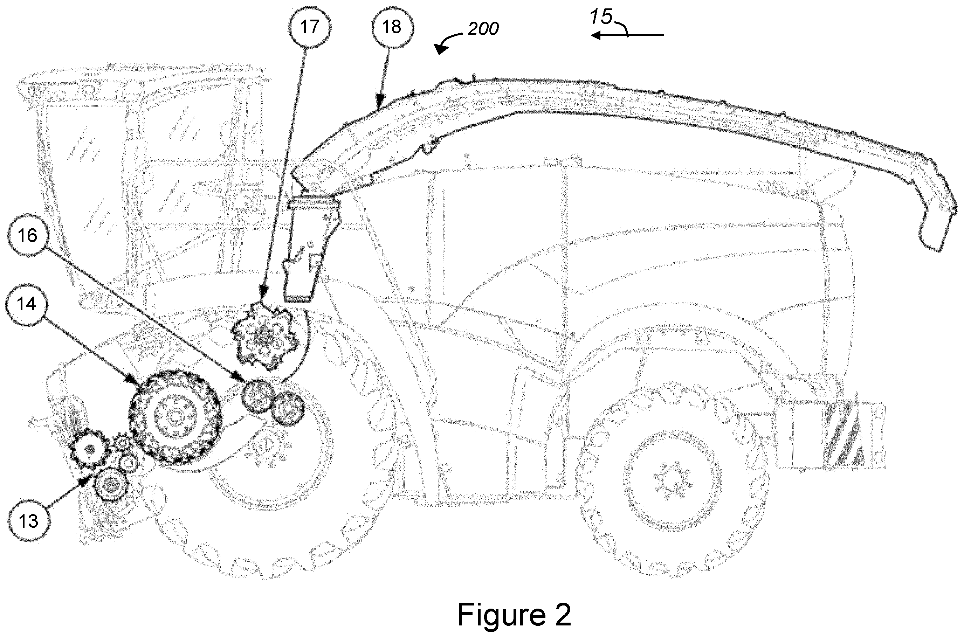

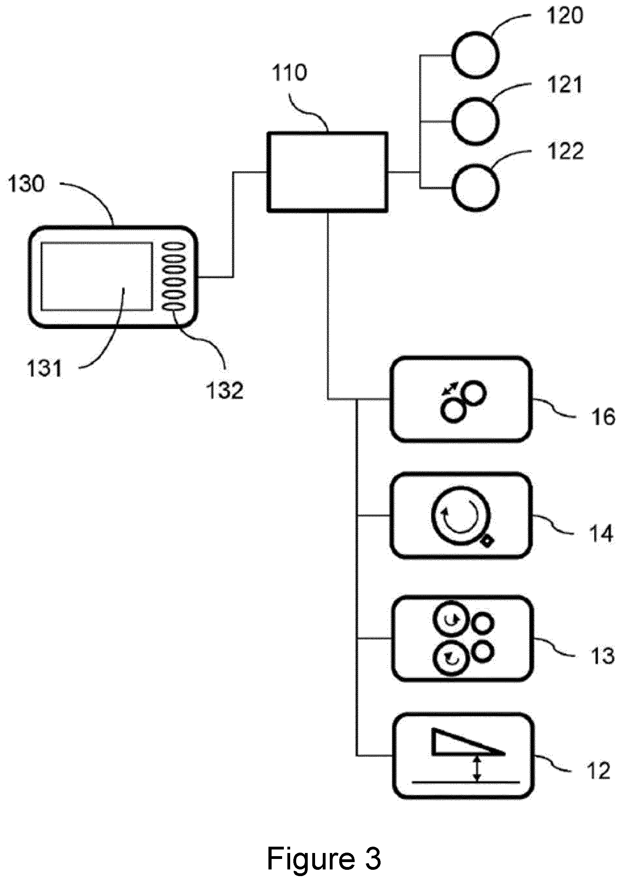

Figures 1 to 3 illustrate a forage harvester according to one or more embodiments of the present disclosure. Figure 1 shows an agricultural harvester in the form of a forage harvester 10; Figure 2 highlights a crop processing path 200 of the forage harvester 10; and Figure 3 shows a schematic diagram with some functional elements of the forage harvester 10.

The forage harvester 10 is configured to harvest crops 500 such as corn and grass that can be used in the production of animal feed. To this end, a header 12 is attached to a front end of the forage harvester 10. The header 11 is adjustable in height and configured to cut and gather the crop 500 from a field as the forage harvester 10 moves in a forward direction indicated by arrow 15. A set of feed rolls 13 (or rollers) is arranged to draw the cut crop from the header 12 into a crop flow channel, where the crop is processed. The processed crop (or crop silage) is then guided into a spout 18, accelerated by a blower 17, and discharged into a trailer that may drive alongside or behind the forage harvester 10.

The processing of the harvested crop typically involves chopping the crop 500 into smaller pieces using a cutter drum 14 and a step of crushing the cut crop using a crop processor 16. The cutter drum 14 cuts the crop 500 between a rotating drum and a counter knife. The length of cut depends on the relative speed of the feed rolls 13 and the cutter drum 14. While the rotational speed of the cutter drum 14 is often directly linked to the engine speed, length of cut adjustments are typically realised by controlling the rotational speed of the feed rolls 13. The faster the feed rolls 13, the longer the crop pieces.

The crop processor 16, also called a kernel processor 16, is positioned downstream of the cutter drum 14 and made up of two toothed crop processor rolls (also referred to as crop processor rollers) with a gap /separation therebetween. The main function of the crop processor 16 is to crush corn and other cereal grains that easily pass the cutter drum 14 to release the nutritious content of the kernels. Similarly, the crop processor 16 may be used to release more of the nutritious content of non-grain material. A gap (or separation) between the two toothed crop processor rolls can be adjusted to control the operation of the crop processor 16.

Adjusting machine parameters of the forage harvester 10, such as by changing the drive speed of the forage harvester 10, the height of the header 12, the rotational speed of the feed rolls 13, or the size of the gap between the toothed crop processor rolls of the crop processor 16 may affect the volume and content of the harvested crop as it is gathered in the trailer. Additionally, such adjustments to the machine parameters influence the fuel consumption of the forage harvester 10. For example, lowering the header 12 will cause more crop 500 to be taken from the field and more fuel to be consumed for the processing of that crop 500. Also lowering the speed of the feed rolls 13 or reducing the gap between the crop processor rolls 16 leads to a higher fuel consumption.

The operation of the forage harvester 10 and its various functional parts may be controlled by one or more electronic controllers 110. A user interface 130, which in this example is a display unit, may be operatively coupled to the controller 110 to show relevant operational information on a screen 131. The user interface 130 may be positioned in a user cab 20. The user interface 130 may further provide a graphical user interface, enabling the user to control what information is shown and to adjust one or more machine parameters of the forage harvester 10 when needed. The user interface may be controlled using hardware buttons 132 provided on the display unit or using on-screen buttons if the screen 131 is equipped with touch screen functionality.

Control of the harvester operation may at least partly be automatic, based on one or more sensors 120, 121, 122 that are provided for obtaining real-time information about the forage harvester 10 and/or the crop moving through it. The sensors may include a kernel quality sensor 120. In some examples, closed-loop automatic control of the machine parameters may be achieved using the kernel quality sensor 120. However, values from the kernel quality sensor 120 can be slow to update following adjustment of machine parameters and the forage harvester 10 may have harvested a significant amount of crop before a desired quality is achieved. The one or more sensors may comprise one or more of: a moisture sensor 121; an engine RPM sensor 122; a length of cut sensor; a harvested volume sensor; or any other sensor for measuring a machine parameter.

In conventional examples, the kernel quality sensor may comprise a camera and/or NIR (Near InfraRed) sensor provided at the spout 18 to monitor the crop moving through the spout. An example of such a kernel quality sensor is described in copending application EP24170542. In that example, an agricultural machine has a conveyor for moving harvested crop material and an optical sensor that captures image data of the crop material. An image processing system analyzes the image data to calculate a kernel processing score (KPS).

Positioning a kernel quality sensor 120 on the spout 18 can result in demanding requirements for the sensor 120. For example, the camera frame rate must be sufficiently high to capture clear images of the moving crop silage. Further, the NIR sensor can add significant cost to the component.

The present disclosure provides a forage harvester system in which the kernel quality sensor 120 comprises: one or more processors 60; and a mobile device 40 with a camera for capturing an image of a sample of crop silage 50 that has been processed by the forage harvester 10. The one or more processors 60 are communicatively coupled with the mobile device 40 and may process the image to determine a KPS. The controller 110 of the forage harvester 10, may then set one or more machine parameters based on the KPS. In some examples, the one or more processors 60 may receive moisture data and determine the KPS or set the one or more machine parameters based on the moisture data. In some examples, the one or more processors 60 may interact with a server-hosted farming management platform to output the KPS, and/or receive personalisation parameters for refining the KPS or refining the setting of the one or more machine parameters based on the KPS.

The one or more processors 60 may comprise one or more processors of the mobile device 40, the forage harvester 10 (e.g. the controller 110), and/or a server. In other words, the one or more processors 60 may be positioned solely in each of the mobile device, forage harvester, or server or in a combination of two or more of them. The mobile device 40 may comprise a dedicated mobile device for the harvesting operation. Such a dedicated mobile device may comprise a NIR camera to provide the same functionality as the second located in the spout 18 described above. In other examples, the mobile device 40 may comprise a personal mobile device of a user. The mobile device 40 may comprise a smart phone, tablet, laptop or other smart computing device.

The one or more processors 60 may set one or more machine parameters based on the KPS. In some examples, the one or more processors may compare the KPS to a KPS threshold and adjust the one or more machine parameters if the KPS is less than the KPS threshold. The KPS threshold may be set by a user such as an operator or a farmer connected via a farming management platform (see below).

In some examples, the one or more processors 60 may calculate initial values of the one or more machine parameters by inputting the KPS threshold to a feedforward model. The one or more processors 60 may input a number of other input parameters to the feedforward model for calculating the initial vales, such as crop condition parameters (e.g. moisture) or other machine parameters including fixed machine parameters. The other machine parameters may include: a cutter drum type; a number of knives; a crop processor roll surface type; a speed of the crop processor rolls; a speed ratio between the crop processor rolls; an engine speed, an accelerator speed or a cutter speed; a speed ratio between an engine speed and an accelerator speed; a speed ratio between an engine speed and a cutter speed; and a speed ratio between an engine speed and a speed of the crop processor rolls. The feedforward model may comprise a regression model or machine learning model trained on a dataset that maps the machine parameters and any input parameters to KPS values.

The one or more processors 60 may set the one or machine parameters to the calculated initial values. Following an initial harvest operation, the one or more processors 60 may receive and process the image data to determine the KPS. The one or more processors 60 may refine the initial values of the one or more machine parameters if the KPS is less than the KPS threshold. The one or more processors 60 may input the KPS to the feedforward model to calculate updated machine parameter values. The one or more processor may set the one or more machine parameters to the updated machine parameter values.

The mobile device 40 can capture an image of a sample of crop silage 50. For example, an operator may halt the forage harvester 10 and collect the sample 50 from an accompanying trailer. In some examples, the operator may filter/sieve out any non-grain components from the sample 50 to simplify the calculation of the KPS.

The one or more processors 60 may receive image data (corresponding to the image) from the mobile device. The one or more processors 60 can process the image data to determine the KPS. For example, the one or more processors 60 can detect kernels in the image. In examples in which the operator has not filtered out the non-grain components from the sample 50, the one or more processors 60 may identify particles of the crop silage in the image and classify the particles as a grain or non-grain component. Such a task may be performed using a machine learning algorithm which has been trained with example samples of crop silage with individual particles labelled as grain or non-grain components.

The one or more processors 60 may determine a size of the kernels in the image. The image may include a size reference object for calibrating the scale of the image. For example, the sample may be placed on a board with a size reference marker and the image may include the size reference marker in the image. The size reference marker may include a fiducial marker, and the one or more processors may identify the scale and/or orientation/perspective of the sample 50 based on the size and perspective of the fiducial marker in the 2D image. Providing such a size reference marker can enable a user to capture the image with the mobile device 40 from a range of distances and angles.

The KPS may be determined as a fraction of small kernels (below a threshold kernel size) relative to a total kernel count (e.g. total number of kernels). Small kernels are typically cracked kernels and therefore the fraction of their area is a good measure of KPS. Such a calculation may be performed in the manner described in EP24170542. Key steps of such a calculation can include: generating a histogram based on the size of the size, surface area, and quantity of detected kernel particles; applying a mathematical function to the histogram to enhance its informative value; and calculating the KPS from the analyzed data.

A disadvantage of using a purely image-based calculation is that the determined KPS is calculated based on size-only. However, a more accurate KPS value can be obtained by performing a mass-based calculation.

In some examples, the one or more processors 60 may utilise moisture data to improve the KPS or the control of the harvester. The one or more processors 60 may receive a moisture value representative of a moisture value of the crop silage. The one or more processors 60 may receive the moisture value from a moisture sensor 121 on the forage harvester 10. In some examples, the one or more processors 60 may receive the moisture value from a (local) weather station. In some examples, the one or more processors 60 may receive a moisture value from a server, for example from a farming management platform used to manage the operation of the farming environment in which the harvester 10 is operating.

The moisture value of the crop silage can enable determination of a mass-based KPS. The moisture value can also act as a proxy for crop maturity because the crop moisture will vary between an early stage of the growing season and a late stage of the growing season. The one or more processors 60 may respond to the crop moisture value in a number of ways.

In some examples, the one or more processors 60 may determine or refine the KPS based on the crop moisture value (i.e. adjust the KPS determined from the kernel quality sensor). For example, the one or more processors 60, may estimate a mass of the kernels using the moisture value and the known density of water. The one or more processors 60 may estimate the mass of the kernels using an equation or look-up table relating the moisture value and the size measurements to a mass value. The one or more processors can then provide a more accurate KPS by determining the KPS as a fraction of kernels with a mass less than a threshold mass relative to the total mass.

As a second example, the one or more processors 60 may determine or refine the KPS threshold based on the moisture value.

In yet further examples, the one or more processors 60 may refine the control of the one or more machine parameters based on the crop moisture value. For example, if the crop moisture value indicates that the crop maturity is early-season, the one or more processors may increase the separation between the crop processor rollers 16. In some examples, the one or more processors may input the moisture value to a feedforward model for calculating the initial or updated machine parameter values for setting the one or more machine parameters, as described above.

In some examples, the one or more processors 60 are configured to output the KPS and/or the captured image to a server-hosted farming management platform (FMP). A FMP may comprise a software system for managing a plurality of agricultural vehicles and processes for one or more farming locations. The FMP may record, track and analyse data related to the farming location. The data may comprise environmental data, crop data and vehicle data. The data may include historic data, such as seasonal data, and live data. Outputting the KPS and or the image to the (FMP) can provide rich additional data to a farmer using the FMP. For example, a farmer may adjust the KPS threshold if the determined KPS is close to the KPS threshold, e.g. because bad weather is forecast and a compromise in quality is acceptable. The FMP may store the KPS / image data in a memory for future reference / use / analysis.

In some examples, the one or more processors 60 may include at least one server-based processor that provides the FMP. In some examples, the one or more processors 60 may comprise at least one server-based processor to determine the KPS "in the cloud". In this way, the one or more processors 60 may utilise greater computational resources than may be available on the forage harvester 10 or mobile device 40.

The one or more processors 60 may receive reference data from the FMP. The reference data may include the KPS threshold, which may be set by the farmer or based on historical values of the KPS, e.g, for a particular season.

In some examples, the reference data may include historic KPS values for the particular vehicle and/or location. The historic KPS values may include an expected range of KPS values for the particular vehicle and/or location. The one or more processors 60 may compare the determined KPS value with the historic KPS value. If the determined KPS value is within the expected range of KPS values, the one or more processors 60 may output an indication that the determined KPS value is accepted. For example, the mobile device 40 may output an indication to the operator that the KPS determination has been successful and they can continue harvesting. If the determined KPS value lies outside the expected range of KPS values, the one or more processors 60 may output (e.g. via the mobile device 40) a request for a new image and/or new sample 50.

In some examples, the reference data may comprise personalisation data relating to the forage harvester 10 and/or the location of the harvesting operation. For example, the personalisation data may comprise machine parameter calibration mappings that map the one or more machine parameters to measured KPS values. The personalisation data may comprise a specific model mapping the machine parameters to the measured KPS values. The personalisation data may comprise a lookup table with the mappings. The one or more processors 60 may set the one or more machine parameters using the personalisation data and the KPS.

The personalisation data may comprise location calibration data that maps KPS values determined using image data from a mobile device to KPS values determined using a laboratory technique for the specific location. The location calibration data may also account for measured moisture values. The one or more processors 60 may refine the KPS based on the location calibration data.

The one or more processors 60 may receive other data from the FMP. For example, the one or more processors 60 may send to the FMP an indication of the model of mobile device / camera that captured the image and receive device calibration data for calibrating the image and/or calculated KPS.

The one or more processors 60 may include the controller 110. The controller may set one or more machine parameters based on the determined KPS. The one or more machine parameters may comprise one or more of: an engine speed of the forage harvester 10; a speed of the CP rolls; a speed of the cutter drum; a separation of the crop processor rollers 16; a speed ratio of the crop processor rollers 16; a driving speed; and a cut length. As noted above, the one or more processors 60 may input the KPS and crop condition parameters such as moisture to a feedforward model to calculate updated machine parameter values for setting the one or more machine parameters. The one or more processors 60 may output the calculated updated machine parameter values to the user via the mobile device or may directly set the one or more machine parameters according to the updated machine parameter values.

Throughout the present specification, the descriptors relating to relative orientation and position, such as "horizontal", "vertical", "top", "bottom" and "side", are used in the sense of the orientation of the forage harvester as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

## Claims

1. A forage harvester system comprising:
a forage harvester configured to harvest crop and process the crop to form crop silage; and
one or more processors configured to:
receive image data from a mobile device, wherein the image data corresponds to an image of a sample of the crop silage captured by the mobile device;
process the image data to determine a kernel processing score; and
set one or more machine parameters of the forage harvester based on the kernel processing score.

2. The forage harvester system of claim 1, wherein the one or more processors are configured to:
receive a kernel processing score threshold; and
adjust the one or more machine parameters if the kernel processing score is less than the kernel processing threshold.

3. The forage harvester system of claim 1 or claim 2, wherein the one or more processors are configured to:
calculate updated machine parameter values for each of the one or more machine parameters by inputting the kernel processing score to a feedforward model; and
set the machine parameter values to the updated machine parameter values.

4. The forage harvester system of any preceding claim, wherein the one or more processors are configured to:
receive moisture data representative of a moisture value of the harvested material; and
adjust the kernel processing score based on the moisture data;
adjust the kernel processing score threshold based on the moisture data; or
set the one or more machine parameters based on the moisture data.

5. The forage harvester system of claim 3 or claim 4, wherein the one or more processors are configured to:
calculate updated machine parameter values for each of the one or more machine parameters by inputting the kernel processing score and the moisture value to a feedforward model; and
set the machine parameter values to the updated machine parameter values.

6. The forage harvester system of claim 4 or claim 5, wherein the one or more processors is configured to estimate a mass of kernels in the image using an equation or look-up table relating the moisture value and size measurements of each kernel to a respective mass value.

7. The forage harvester system of any of claims 4 to 6, wherein the one or more processors are configured to receive the moisture data from one or more of:
a moisture sensor of the forage harvester;
a weather station; and
a server.

8. The forage harvester system of any preceding claim, wherein the one or more processors are configured to:
output the image data and/or the kernel processing score to a farming management platform.

9. The forage harvester system of any preceding claim, wherein the one or more processors are configured to:
receive personalisation data; and
adjust the kernel processing score based on the personalisation data; and/or
set the one or more machine parameters based on the personalisation data.

10. The forage harvester system of claim 9, wherein the personalisation data comprise one or more of:
location specific personalisation data; and
machine specific personalisation data.

11. The forage harvester system of claim 10, wherein the machine specific personalisation data comprises machine parameter calibration mappings that map the one or more machine parameters to measured KPS values.

12. The forage harvester system of claim 10 or claim 11, wherein the location specific personalisation data comprises location calibration data that maps KPS values determined using image data from a mobile device to KPS values determined using a laboratory technique for the specific location.

13. The forage harvester system of any of claims 10 to 12, wherein the personalisation data comprises an expected range of kernel processing values for the forage harvester and/or a location of harvesting operation, wherein the one or more processors are configured to:
compare the kernel processing score to the expected range; and
indicate that the kernel processing score is valid if the kernel processing score is inside the expected range; and
indicate that a new image or sample is required if the kernel processing score is outside the expected range.

14. The forage harvester of any preceding claim, wherein the one or more machine parameters comprise one or more of:
an engine speed;
a separation of the crop processor rollers;
a speed ratio of the crop processor rollers;
a driving speed; and
a cut length.

15. A method for controlling a forage harvester comprising:
receiving image data from a mobile device, wherein the image data corresponds to an image, captured by the mobile device, of a sample of crop silage produced by the forage harvester;
processing the image data to determine a kernel processing score; and
setting one or more machine parameters of the forage harvester based on the kernel processing score.
